# EUROPÄISCHE PATENTANMELDUNG

(11) **EP 0 937 755 A1**
(43) Veröffentlichungstag der Anmeldung: **25.08.1999**
(21) Anmeldenummer: 99103462.0
(22) Anmeldetag: 23.02.1999
(51) Int. Cl.: C09C 1/30, C01B 33/193, A61K 9/14, A61K 31/14

(54) **Fällungskieselsäuregranulate**

(30) Priorität: 24.02.1998 DE 19807700
(71) Anmelder: Degussa-Hüls Aktiengesellschaft, 45764 Marl (DE)
(72) Erfinder: Siray, Mustafa, Dr., 53127 Bonn (DE); Meier, Karl, 53347 Alfter (DE); Oelmüller, Rolf, 53454 Hanau (DE); Nagel, Werner, Dr., 63755 Alzenau (DE); Müller, Astrid, 63776 Mömbris (DE)

(57) **Zusammenfassung**

Fällungskieselsäuregranulate mit den Staubkennzahlen:
- Staubmaximum: ≦ 5,0 Gew.-%
- Staubzahl: ≦ 10,0 Gew.-%
- Absinkzahl bis 5 %: ≦ 5 sek.
- Absinkzahl bis 2 %: ≦ 50 sek.
werden hergestellt, indem man eine Fällungskieselsäuresuspension auf einen pH-Wert von 2 bis 3,9 einstellt und sprühtrocknet. Sie werden zur Adsorption von flüssigen Wirkstoffen, wie zum Beispiel Cholinchloridlösung und Vitamin E, verwendet.

## Beschreibung

Die Erfindung betrifft Fällungskieselsäuregranulate, ein Verfahren zu ihrer Herstellung und ihre Verwendung.

Es ist bekannt, Fällungskieselsäuregranulate mit Hilfe eines Düsenzerstäubers oder eines Zerstäubers für zwei Stoffe herzustellen, indem man dabei eine Fällungskieselsäuresuspension mit einem pH-Wert von mindestens 4 und einem Feststoffgehalt über 18 Gew.-% einsetzt (EP-B 0 018 866).

Die bekannten Fällungskieselsäuregranulate, die als Verstärkerfüllstoff für Elastomere vorgesehen sind, haben den Nachteil, daß sie einen hohen Abrieb und dadurch bedingt einen unerwünscht hohen Staubanteil aufweisen. Sie sind aus diesem Grunde für andere Anwendungen, bei denen auf Staubfreiheit Wert gelegt wird, nicht besonders gut geeignet sind.

Weiterhin sind die bekannten Fällungskieselsäuregranaulate nicht als Trägerkieselsäure für Cholinchloridlösung geeignet, wenn Wirkstoffadsorbate mit einem Gehalt an Wirkstoff von ≥ 50 Gew.-% hergestellt werden sollen.

Es besteht somit die Aufgabe, Fällungskieselsäuregranulate mit einem niedrigen Staubgehalt sowie guter Aufnahmekapazität für Cholinchloridlösung herzustellen.

Gegenstand der Erfindung sind Fällungskieselsäuregranulate, welche durch die folgende Staubkennzahlen gekennzeichnet sind:
- Staubmaximum: ≦ 5,0 Gew.-%
- Staubzahl: ≦ 10,0 Gew.-%
- Absinkzahl bis 5 %: ≦ 5 sek.
- Absinkzahl bis 2 %: ≦ 50 sek.

Die erfindungsgemäßen Fällungskieselsäuregranulate können hergestellt werden, indem man eine Fällungskieselsäuresuspension auf einen pH-Wert von 2 bis 3,9 einstellt und sprühtrocknet. Die Sprühtrocknung kann mittels einer Einstoff-Düse in einem Düsenturm oder mittels der FSD-Technologie durchgeführt werden. Die Fällungskieselsäuresuspension kann einen Feststoffgehalt von 17 bis 19,5 Gew.-% aufweisen.

Die erfindungsgemäßen Fällungskieselsäuregranulate können zur Adsorption von flüssigen Wirkstoffen, insbesondere von Vitaminen, wie zum Beispiel Vitamin-E-Acetaten, sowie zur Adsorption von Cholinchloridlösung eingesetzt werden.

### Produkt A

In einer Ausführungsform der Erfindung können die Fällungskieselsäuregranulate durch die folgenden Staubkennzahlen gekennzeichnet sein:
- Staubmaximum: ≦ 1,0 Gew.-%
- Staubzahl: ≦ 2,0 Gew.-%
- Absinkzahl bis 5 %: ≦ 1,0 sek.
- Absinkzahl bis 2 %: ≦ 2,0 sek.

Diese Fällungskieselsäuregranulate können weiterhin durch die folgenden physikalisch-chemischen Kenndaten gekennzeichnet sein:

| | | |
|---|---|---|
| Stampfdichte | g/l | 263 - 278 |
| BET-Oberfläche | m²/g | 199 - 203 |
| CTAB-Oberfläche | m²/g | 178 - 180 |
| DBP-Zahl | g/100 g | 220 - 320 |
| Mittlere Teilchengröße d₅₀ | µm | 314 - 480 |
| pH-Wert | | 4,9 - 5,2 |

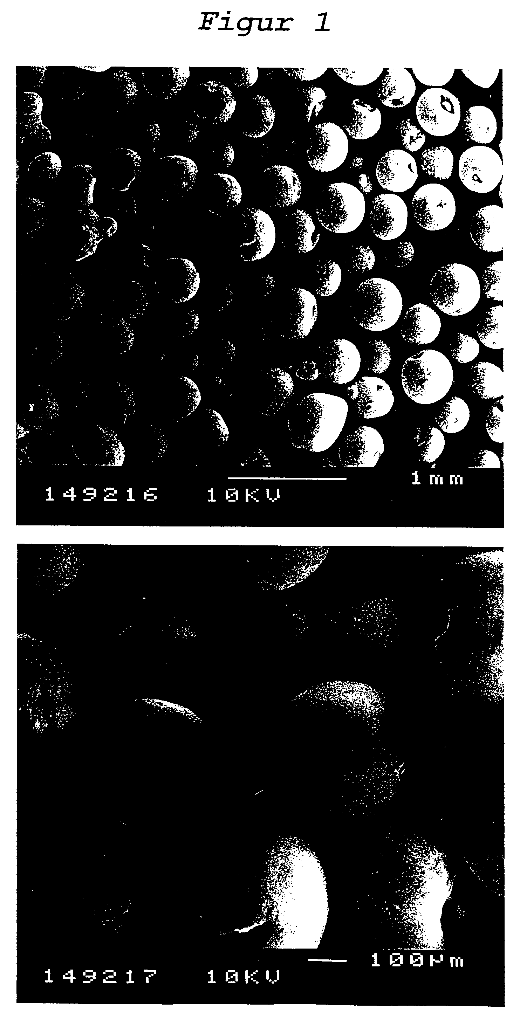

Die erfindungsgemäßen Fällungskieselsäuregranulate können zusätzlich die folgende physikalisch-chemischen Kenndaten aufweisen:
- Leitfähigkeit:: 200 bis 1.200 µS
- Feuchte:: 3 bis 8 %
- Alpine-Siebrückstand (63 µm):: ≤ 100 %
REM(= Rasterelektronenmikroskop)-Aufnahmen gemäß Figur 1

Die erfindungsgemäßen Fällungskieselsäuregranulate können hergestellt werden, indem man zuerst auf bekanntem Wege gemäß DE-A 14 67 019 die Fällungskieselsäure ausfällt und filtriert. Die Weiterverarbeitung des Fällungskieselsäurefilterkuchens zur Herstellung der versprühbaren Fällungskieselsäuresuspension kann gemäß DE-B 24 47 613 erfolgen.

In einer bevorzugten Ausführungsform kann dabei in der Fällungskieselsäuresuspension ein pH-Wert von 2,0 bis 3,9 eingestellt werden.

Diese Fällungskieselsäuresuspension kann mittels einer Einstoff-Düse in einem Düsenturm zu den erfindungsgemäßen Fällungskieselsäuregranulaten sprühgetrocknet werden.

Die Einstoff -Düse sowie der Düsenturm sind bekannte Vorrichtungen zum Versprühen von Feststoff enthaltenden Suspensionen. Sie werden beschrieben in K. Masters, Spray Drying Handbook, Third Edition, Verlag George Godwin Limited, London / John Wiley and Sons, New York (1979), Seiten 208 bis 231.

In einer weiteren Ausführungsform der Erfindung kann die Fällungskieselsäuresuspension zur Herstellung der erfindungsgemäßen Fällungskieselsäuregranulate mittels der FSD-Technologie versprüht werden.

Die FSD-Trocknungs- bzw. Granulationstechnologie wurde im Jahre 1980 von der Firma NIRO in Kopenhagen entwickelt. Bei diesem Verfahren handelt es sich im Prinzip um eine Kombination zwischen Sprühtrocknung und Fließbetttrocknung.

Die in einem Gasbrenner erzeugte Trocknungsluft tritt zentral durch die Turmdecke ein und verläßt die Trockenkammer ebenfalls durch die Turmdecke in einen Zyklon oder Entstaubungsfilter. Die Sprühtrocknungskammer besteht aus einer schwach konischen Decke, einem kurzen Zylinder und einem schlanken Konus mit integriertem stationärem Fließbett am Konusboden.

Das sprühzutrocknende Produkt wird in der Regel über eine oder mehrere Druckdüsen zerstäubt und dabei im Gleichstrom zur Trocknungsluft abwärts geführt. Der Flüssigkeitszerstäuber ist zentral im Deckenluftverteiler untergebracht. Die kräftige Fluidisierung im Fließbett und die Rezirkulation der durch die Abluft mitgerissenen Feinpartikel in der Trockenkammer bewirken, daß die Sprühtrocknung in einer turbulenten Pulverwolke stattfindet. Gleichzeitig wird der im Entstaubungsfilter abgeschiedene Feineinteil pneumatisch unmittelbar in die Zerstäubungswolke der Druckdüse zurückgeführt. Die Erzielung der notwendigen Restfeuchte sowie die Partikelverteilung werden durch die Betriebsweise des Flüssigkeitszerstäubers sowie des integrierten Fließbettes bzw. weiterer nachgeschalteter Vibrationsfließbette bestimmt. Der Agglomerationsgrad, und damit die Partikelgrößenverteilung, kann durch verschiedene Betriebsparameter in einem relativ weiten Bereich beeinflußt werden.

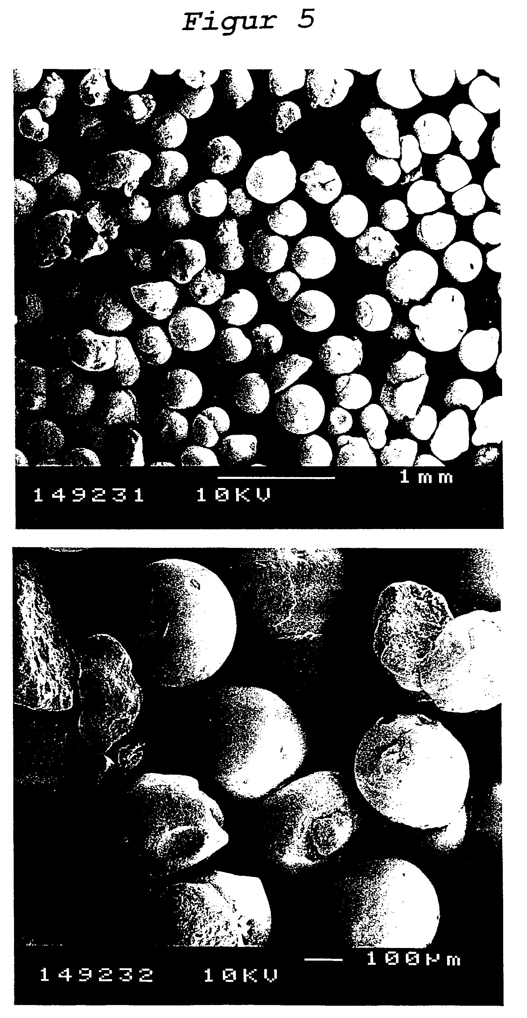

Ein Produkt dieses Verfahrens ist in Figur 5 mittels REM(= Rasterelektronenmikroskop)-Aufnahme dargestellt.

### Produkt B

In einer weiteren Ausführungsform der Erfindung können die Fällungskieselsäuregranulate durch die folgenden Staubkennzahlen gekennzeichnet sein:
- Staubmaximum: ≦ 5,0 Gew.-%
- Staubzahl: ≦ 10,0 Gew.-%
- Absinkzahl bis 5 %: ≦ 5 sek.
- Absinkzahl bis 2 %: ≦ 50 sek.

Diese Fällungskieselsäuregranulate können weiterhin durch die folgenden physikalisch-chemischen Kenndaten gekennzeichnet sein:

| | | |
|---|---|---|
| Stampfdichte | g/l | 204 - 208 |
| BET-Oberfläche | m²/g | 423 - 430 |
| CTAB-Oberfläche | m²/g | 337 - 340 |
| DBP-Zahl | g/100 g | 220 - 320 |
| Mittlere Teilchengröße d₅₀ | µm | 332 - 400 |
| pH-Wert | | 3,8 - 4,0 |

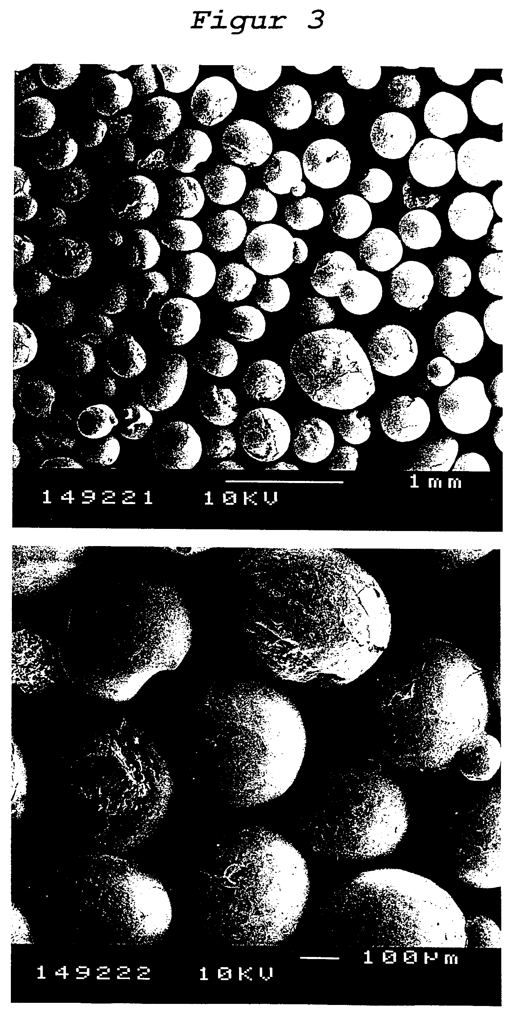

Die erfindungsgemäßen Fällungskieselsäuregranulate können zusätzlich die folgenden physikalisch-chemischen Kenndaten aufweisen:
- Leitfähigkeit:: 200 bis 1.200 µS
- Feuchte:: 3 bis 8 %
- Alpine-Siebrückstand (63 µm):: ≤ 100 %
REM(= Rasterelektronenmikroskop)-Aufnahmen gemäß Figur 3

Die erfindungsgemäßen Fällungskieselsäuregranulate können hergestellt werden, indem man zuerst auf bekanntem Wege gemäß DE-A 31 44 299 die Fällungskieselsäure ausfällt und filtriert. Die Weiterverarbeitung des Fällungskieselsäurefilterkuchens zur Herstellung der versprühbaren Fällungskieselsäuresuspension kann gemäß DE-B 24 47 613 erfolgen.

In einer bevorzugten Ausführungsform der Erfindung kann dabei in der Fällungskieselsäuresuspension ein pH-Wert von 2,0 bis 3,9 eingestellt werden. Diese Fällungskieselsäuresuspension kann mittels einer Einstoff-Düse in einem Düsenturm zu den erfindungsgemäßen Fällungskieselsäuregranulaten sprühgetrocknet werden.

### Produkt C

In einer weiteren Ausführungsform der Erfindung können die Fällungskieselsäuregranulate durch die folgenden Staubkennzahlen gekennzeichnet sein:
- Staubmaximum: ≦ 5,0 Gew.-%
- Staubzahl: ≦ 10,0 Gew.-%
- Absinkzahl bis 5 %: ≦ 5 sek.
- Absinkzahl bis 2 %: ≦ 50 sek.

Diese Fällungskieselsäuregranulate können weiterhin durch die folgenden physikalisch-chemischen Kenndaten gekennzeichnet sein:

| | | |
|---|---|---|
| Stampfgewicht | g/l | 278 - 294 |
| BET-Oberfläche | m²/g | 180 - 190 |
| CTAB-Oberfläche | m²/g | 168 - 171 |
| DBP-Zahl | g/100 g | 220 - 320 |
| Mittlere Teilchengröße d₅₀ | µm | 306 - 321 |
| pH-Wert | | 4,0 - 4,1 |

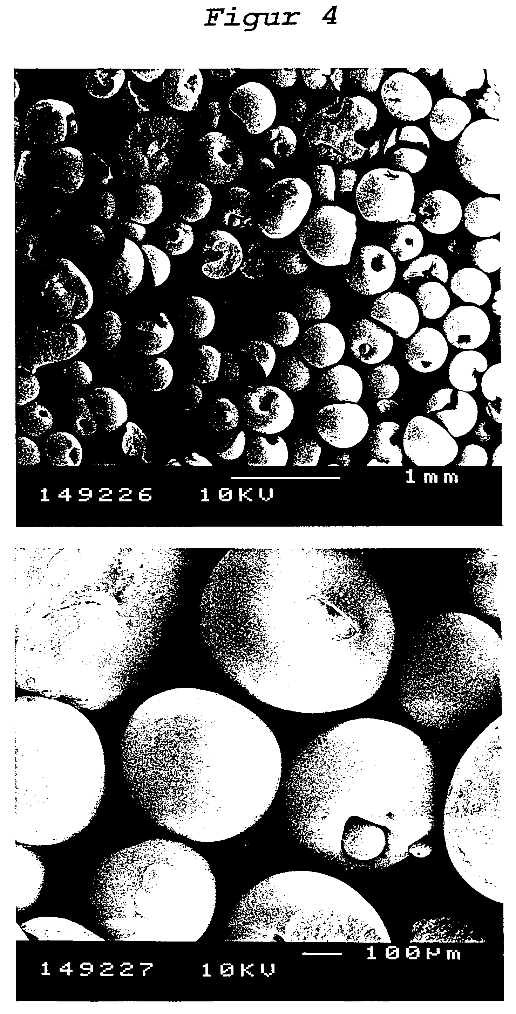

Die erfindungsgemäßen Fällungskieselsäuregranulate können zusätzlich die folgenden physikalisch-chemischen Kenndaten aufweisen:
- Leitfähigkeit:: 200 bis 1.200 µS
- Feuchte:: 3 bis 8 Gew.-%
- Alpine-Siebrückstand (63 µm):: ≤ 100 %
REM(= Rasterelektronenmikroskop)-Aufnahmen gemäß Figur 4

Die erfindungsgemäßen Fällungskieselsäuregranulate können hergestellt werden, indem man zuerst auf bekanntem Wege gemäß DE-A 31 44 299 die Fällungskieselsäure ausfällt und filtriert. Die Weiterverarbeitung des Fällungskieselsäurefilterkuchens zur Herstellung der versprühbaren Fällungskieselsäuresuspension kann gemäß DE-B 24 47 613 erfolgen.

In einer bevorzugten Ausführungsform der Erfindung kann dabei in der Fällungskieselsäuresuspension ein pH-Wert von 2,0 bis 3,9 eingestellt werden. Diese Fällungskieselsäuresuspension kann mittels einer Einstoff-Düse in einem Düsenturm zu den erfindungsgemäßen Fällungskieselsäuregranulaten sprühgetrocknet werden.

Die erfindungsgemäßen Fällungskieselsäuregranulate weisen vorteilhafterweise gegenüber bekannten Fällungskieselsäuregranulaten einen deutlich niedrigeren Staubgehalt auf. Sie können daher besonders gut für Zwecke, die eine niedrigere staubbelästigung erfordern, verwendet werden. Sie weisen zusätzlich eine gute Adsorptionskapazität für Wirkstoffe, wie zum Beispiel Cholinchloridlösung, und Vitamine, wie Vitamin-E-Acetat, auf.

### Beispiel 1

### Herstellung der Fällungskieselsäuregranulate (Produkt A)

Die Herstellung der Fällungskieselsäure erfolgt gemäß DE-A 14 67 019, Beispiel 1.

Es wird dabei wie folgt vorgegangen:

In einem 80 l fassenden Behälter werden 11,5 l Wasser von 80 °C vorgelegt und bis zu einem pH-Wert von 10 mit einer verdünnten Wasserglaslösung versetzt. Dann werden bei 86 °C innerhalb von 100 Minuten gleichzeitig eine Natriumsilikatlösung vom spezifischen Gewicht 1,063 und eine Schwefelsäurelösung mit 90 g H₂SO₄/l in die Vorlage eingespeist. Die Zulaufgeschwindigkeit der Säure beträgt etwa 1/3 bis 1/4 von derjenigen der Alkalisilikatlösung. Es wird ein pH-Wert zwischen etwa 10 und 11,5 eingehalten. Die Zugabe dauert etwa 100 Minuten. Die Viskosität steigt dabei von 2,2 Einheiten auf 11,5 Einheiten an. Danach fällt sie auf 3,8 Einheiten ab. Die Zugabe der Säure und des Wasserglases wird während einer Zeit von etwa 100 Minuten unter Einhaltung des genannten pH-Bereiches fortgesetzt. Die Fällösung enthält etwa 50 g SiO₂/l. Sie wird sodann auf einen pH-Wert von 7 und anschließend auf einen solchen von 2,5 angesäuert.

Die erhaltene Fällungskieselsäure wird abfiltriert. Der Fällungskieselsäurefilterkuchen wird gewaschen und gemäß Beispiel 1 der DE-C 24 47 613 in eine Fällungskieselsäuresuspension überführt. Dabei wird wie folgt vorgegangen:

260 kg/min Fällungskieselsäurefilterkuchen mit einem Wassergehalt von 82 % werden mittels der Doppelschnecke bei 295 Upm durch den verengten Austrag zur Erhöhung des Knet/Misch-Effektes gleichzeitig mit 0,6 l/min verdünnter, wäßriger 30 %iger Schwefelsäure aus der Leitung in den 1,5 m³ fassenden Dissolverbehälter eingetragen. Dabei wird die Konzentration an Säure so gehalten, daß die Fällungskieselsäuresuspension einen pH-Wert von 3 hat. Der Dissolverbehälter hat einen Durchmesser von 1,2 m, eine Höhe von 1,5 m und ist zylinderförmig angeordnet. Der Dissolver, der ein Doppelscheiben-Dissolver ist, hat einen Durchmesser der beiden Scheiben von 0,4 m und wird durch den Elektromotor, welcher eine Leistung von 36,7 kw (50 PS) bringt, angetrieben. Die Umdrehungsgeschwindigkeit der beiden Scheiben beträgt 21 m/sec (1000 Upm). Über die Tauchsonden wird die Füllhöhe zwischen 0,8 und 1,20 m gehalten, so daß sich pro Eintrag von 1 kg Fällungskieselsäurefilterkuchen 1,5 kg Fällungskieselsäuresuspension in dem Dissolverbehälter befinden. Aus der Zone höchster Turbulenz wird mittels des Siebkorbes die Fällungskieselsäuresuspension abgezogen. Ein Teil dieser Fällungskieselsäuresuspension wird über die Leitung und die Pumpe wieder rezykliert, um den Grit- und Knötchenanteil weiter zu senken.

Die Fällungskieselsäuresuspension weist einen pH-Wert von 3,2 auf. Der Feststoffgehalt beträgt 19,0 Gew.-%.

Die Fällungskieselsäuresuspension wird anschließend sprühgetrocknet, wobei eine Einstoff-Düse (Düsenturm) verwendet wird.

Die Sprühtrocknungsbedingungen sowie die physikalischchemischen Daten des erhaltenen Fällungskieselsäuregranulates sind in der Tabelle 1 aufgeführt.

**Tabelle 1**

| A. Trocknungsbedingungen | | | | | | |
|---|---|---|---|---|---|---|
| Versuchsnummer | | 3 | 6 | 7 | 8 | 9 |
| Produktbezeichnung | | Produkt A | Produkt A | Produkt A | Produkt A | Produkt A |
| Düsendruck | [bar] | 8 | 12 | 12 | 12 | 12 |
| Prozeßluftmenge | [kg/h] | 654 | 654 | 512 | 509 | 509 |
| Eintrittstemperatur | [°C] | 384 | 394 | 464 | 428 | 399 |
| Austrittstemperatur | [°C] | 175 | 171 | 159 | 159 | 151 |
| Dichte Suspension | [g/ml] | 1,1 | 1,1 | 1,1 | 1,1 | 1,1 |
| Suspensionstemperatur | [°C] | 20 | 20 | 20 | 20 | 20 |
| Feststoffgehalt | [%] | 19 | 19 | 19 | 19 | 19 |
| Viskosität | [mPa*s] | 75 | 75 | 75 | 75 | 75 |

| B. Physikalisch-chemische Eigenschaften | | | | | | |
|---|---|---|---|---|---|---|
| Produktfeuchte | [%] | 61 | 23 | 23 | 33 | 43 |
| Korngrößenverteilung | | | | | | |
| D[v, 0.5] | [µm] | 480 | 314 | 380 | 349 | 387 |
| D[v, 0.9] | [µm] | 907 | 467 | 485 | 478 | 484 |
| D[v, 0.1] | [µm] | 305 | 209 | 235 | 232 | 265 |
| N₂-Oberfläche | [m²/g] | 200 | 201 | 199 | 203 | 199 |
| CTAB-Oberfläche | [m²/g] | 180 | 178 | 179 | 180 | 178 |
| pH-Wert | | 5 | 4,9 | 5,1 | 5,2 | 5 |
| Leitfähigkeit | [µS] | 600 | 510 | 630 | 605 | 580 |
| Feuchte | [%] | 4,1 | 5,1 | 4,2 | 3,8 | 4,2 |
| Stampfgewicht | [g/l] | 278 | 263 | 263 | 270 | 278 |
| DBP-Aufnahme | [g/100g] | 217 | 250 | 247 | 241 | 233 |
| Alpine SR > 500 µm | [%] | 22,9 | 0,3 | 0,6 | 0,5 | 0,4 |
| Alpine SR > 355 µm | [%] | 69,7 | - | 27,7 | 31,5 | 30 |
| Alpine SR > 250 µm | [%] | 93,8 | 74 | 81,2 | 81,2 | 84,5 |
| Alpine SR > 180 µm | [%] | 98 | 92 | 96 | 93,8 | 95,8 |
| Alpine SR > 63 µm | [%] | 100 | 99 | 100 | 100 | 100 |
| Alpine SR > 45 µm | [%] | 100 | 100 | 100 | 100 | 100 |

### Beispiel 2

### Herstellung der Fällungskieselsäuregranulate (Produkt B)

Die Herstellung der Fällungskieselsäure erfolgt gemäß DE-A 31 44 299, Beispiel 5. Dabei wird wie folgt vorgegangen:

In einem 75 m³-Holzbottich, der als Fällbehälter dient und der mit einem MIG-Balkenrührwerk und einer Ekato-Scherturbine ausgerüstet ist, werden 60 m³ Wasser mit einer Temperatur von 40 °C vorgelegt. In diese Vorlage fließen gleichzeitig mit einer Geschwindigkeit von 9,8 m³/h handelsübliches Wasserglas (SiO₂ . 26,8 Gew.-% Na₂O : 8,0 Gew.-%, Modul = 3,35) und konzentrierte Schwefelsäure (96 %ig) mit einer Geschwindigkeit von 0,98 m³/h ein. Dabei wird die Säure über die Turbine zugesetzt, die mit Fällungsbeginn in Betrieb gesetzt wird. Während dieser Zugabe wird der pH-Wert der Fällvorlage bei 6,0 gehalten. Nach der 13. Fällminute - d.h., bei sich abzeichnendem Viskositätsanstieg - wird die Zugabe von Wasserglas und Säure für die Dauer von 90 Minuten lang unterbrochen. Während dieser Unterbrechungsphase wird weiter mit der Ekatoturbine geschert. Ab der 103. Minute wird die Zugabe von Wasserglas unter Einhalten der obengenannten Zugabegeschwindigeiten und des pH-Wertes bis zur 146. Minute fortgesetzt. Der Feststoffgehalt der Fällungssuspension liegt dann bei 46 g/l. Die Temperatur kann je nach äußeren Temperaturbedingungen einen Wert von 42 - 49 °C angenommen haben. Der End-pH-Wert liegt bei 6,0. Insgesamt werden 9,1 m³ Wasserglas und 0,91 m³ Schwefelsäure umgesetzt. Die Suspension wird in einem Zwischenbehälter vor dem Abpressen 17 Stunden lang gealtert. Im Anschluß an diese Alterungsphase wird die Suspension mittels 4 Filterpressen filtriert. Dabei beträgt die Füllzeit bei einem Enddruck von 3,3 bar 1 Stunde. Nach einer sehr kurzen Waschzeit von nur 1,5 Stunden stellt sich ein Leitfähigkeitswert des abfließenden Filtrats von 1050 µS ein, nach 4 Stunden Waschzeit ein solcher von 280 µS.

Der Feststoffgehalt des erhaltenen Filterkuchens liegt bei 16,5 - 17 Gew.-%.

Der gewaschene Fällungskieselsäurefilterkuchen wird gemäß Beispiel 1 der DE-C 24 47 613 in eine Fällungskieselsäuresuspension überführt. Dabei wird wie folgt vorgegangen:

260 kg/min Fällungskieselsäurefilterkuchen mit einem Wassergehalt von 82 % werden mittels der Doppelschnecke bei 295 Upm durch den verengten Austrag zur Erhöhung des Knet/Misch-Effektes gleichzeitig mit 0,6 l/min verdünnter, wäßriger 30 %iger Schwefelsäure aus der Leitung in den 1,5 m³ fassenden Dissolverbehälter eingetragen. Dabei wird die Konzentration an Säure so gehalten, daß die Fällungskieselsäuresuspension einen pH-Wert von 3 hat. Der Dissolverbehälter hat einen Durchmesser von 1,2 m, eine Höhe von 1,5 m und ist zylinderförmig angeordnet. Der Dissolver, der ein Doppelscheiben-Dissolver ist, hat einen Durchmesser der beiden Scheiben von 0,4 m und wird durch den Elektromotor, welcher eine Leistung von 36,7 kw (50 PS) bringt, angetrieben. Die Umdrehungsgeschwindigkeit der beiden Scheiben beträgt 21 m/sec (1000 Upm). Über die Tauchsonden wird die Füllhöhe zwischen 0,8 und 1,20 m gehalten, so daß sich pro Eintrag von 1 kg Fällungskieselsäurefilterkuchen 1,5 kg Fällungskieselsäuresuspension in dem Dissolverbehälter befinden. Aus der Zone höchster Turbulenz wird mittels des Siebkorbes die Fällungskieselsäuresuspension abgezogen. Ein Teil dieser Fällungskieselsäuresuspension wird über die Leitung und die Pumpe wieder rezykliert, um den Grit- und Knötchenanteil weiter zu senken.

Die Fällungskieselsäuresuspension weist einen pH-Wert von 2,9 auf. Der Feststoffgehalt beträgt 17,5 Gew.-%.

Die Fällungskieselsäuresuspension wird anschließend sprühgetrocknet, wobei eine Einstoff-Düse (Düsenturm) verwendet wird.

Die Sprühtrocknungsbedingungen sowie die physikalischchemischen Daten des erhaltenen Fällungskieselsäuregranulates sind in der Tabelle 2 aufgeführt.

**Tabelle 2**

| A. Trocknungsbedingungen | | | |
|---|---|---|---|
| Versuchsnummer | | 17 | 18 |
| Produktbezeichnung | | Produkt B | Produkt B |
| Düsendruck | [bar] | 14 | 14 |
| Prozeßluftmenge | [kg/h] | 512 | 519 |
| Eintrittstemperatur | [°C] | 446 | 407 |
| Austrittstemperatur | [°C] | 160 | 151 |
| Dichte Suspension | [g/ml] | 1,1 | 1,1 |
| Suspensionstemperatur | [°C] | 20 | 20 |
| Feststoffgehalt | [%] | 17,5 | 17,5 |
| Viskosität | [mPa*s] | 75 | 75 |

| B. Physikalisch-chemische Eigenschaften | | | |
|---|---|---|---|
| Produktfeuchte | [%] | 10 | 39 |
| Korngrößenverteilung | | | |
| D[v, 0.5] | [µm] | 332 | 400 |
| D[v, 0.9] | [µm] | 467 | 488 |
| D[v, 0.1] | [µm] | 223 | 261 |
| N₂-Oberfläche | [m²/g] | 430 | 423 |
| CTAB-Oberfläche | [m²/g] | 340 | 337 |
| pH-Wert | | 4 | 3,8 |
| Leitfähigkeit | [µS] | 680 | 660 |
| Feuchte | [%] | 4,5 | 4,4 |
| Stampfgewicht | [g/l] | 204 | 208 |
| DBP-Aufnahme | [g/100g] | 297 | 282 |
| Alpine SR > 500 µm | [%] | 0,2 | 0,5 |
| Alpine SR > 355 µm | [%] | 17,6 | 30,3 |
| Alpine SR > 250 µm | [%] | 78,4 | 85 |
| Alpine SR >180 µm | [%] | 95,7 | 97,4 |
| Alpine SR > 63 µm | [%] | 100 | 100 |
| Alpine SR > 45 µm | [%] | 100 | 100 |

### Beispiel 3

### Herstellung der Fällungskieselsäuregranulate (Produkt C)

Die Herstellung der Fällungskieselsäure erfolgt gemäß DE-A 195 26 476, Beispiel 2. Dabei wird wie folgt vorgegangen:

In einem 75 m³ Behälter werden 1.725 kg Natriumsilikatlösung (8,90 Gew.-% Na₂O; 27,73 Gew.-% SiO₂ mit Modul SiO₂ : Na₂O = 3,22) und 56,8 m³ heißes Wasser gemischt und auf 93 °C eingestellt. Die Alkalizahl der Vorlage (Verbrauch von 1n HCl pro 100 ml Vorlagelösung gegen Phenolphtalein) liegt bei 7,0.

Während der folgenden 90 Minuten werden gleichzeitig unter Rühren und unter Konstanthalten der Alkalizahl bei 7 16.076 kg Natriumsilikatlösung (8,90 Gew.-% Na₂O und 27,73 Gew. -% SiO₂; Modul SiO₂ : Na₂O = 3,22; Temperatur 57 °C) und 2168 kg 94 %iger Schwefelsäure bei 91 - 93 °C in die Vorlage gegeben. Anschließend wird die Zufuhr an Natriumsilikatlösung gestoppt. Die Zufuhr der 94%igen Schwefelsäure wird innerhalb von 30 Minuten unter weiterem Rühren fortgesetzt, bis der pH-Wert der Fällungssuspension sich auf 3,0 eingestellt hat. Der Feststoffgehalt der erhaltenen Fällungskieselsäuresuspension liegt bei 72 g/l. Die Suspension wird mit 38.000 Liter Wasser verdünnt, und die Fällungskieselsäure mittels einer Filterpresse abgetrennt und mit Wasser ausgewaschen.

Der gewaschene Fällungskieselsäurefilterkuchen wird gemäß Beispiel 1 der DE-C 24 47 613 in eine Fällungskieselsäuresuspension überführt. Dabei wird wie folgt vorgegangen:

260 kg/min Fällungskieselsäurefilterkuchen mit einem Wassergehalt von 82 % werden mittels der Doppelschnecke bei 295 Upm durch den verengten Austrag zur Erhöhung des Knet/Misch-Effektes gleichzeitig mit 0,6 l/min verdünnter, wäßriger 30 %iger Schwefelsäure aus der Leitung in den 1,5 m³ fassenden Dissolverbehälter eingetragen. Dabei wird die Konzentration an Säure so gehalten, daß die Fällungskieselsäuresuspension einen pH-Wert von 3 hat. Der Dissolverbehälter hat einen Durchmesser von 1,2 m, eine Höhe von 1,5 m und ist zylinderförmig angeordnet. Der Dissolver, der ein Doppelscheiben-Dissolver ist, hat einen Durchmesser der beiden Scheiben von 0,4 m und wird durch den Elektromotor, welcher eine Leistung von 36,7 kw (50 PS) bringt, angetrieben. Die Umdrehungsgeschwindigkeit der beiden Scheiben beträgt 21 m/sec (1000 Upm). Über die Tauchsonden wird die Füllhöhe zwischen 0,8 und 1,20 m gehalten, so daß sich pro Eintrag von 1 kg Fällungskieselsäurefilterkuchen 1,5 kg Fällungskieselsäuresuspension in dem Dissolverbehälter befinden. Aus der Zone höchster Turbulenz wird mittels des Siebkorbes die Fällungskieselsäuresuspension abgezogen. Ein Teil dieser Fällungskieselsäuresuspension wird über die Leitung und die Pumpe wieder rezykliert, um den Grit- und Knötchenanteil weiter zu senken.

Die Fällungskieselsäuresuspension weist einen pH-Wert von 2,8 auf. Der Feststoffgehalt beträgt 19 Gew.-%.

Die Fällungskieselsäuresuspension wird anschließend sprühgetrocknet, wobei eine Einstoff-Düse (Düsenturm) verwendet wird.

Die Sprühtrocknungsbedingungen sowie die physikalischchemischen Daten des erhaltenen Fällungskieselsäuregranulates sind in der Tabelle 3 aufgeführt.

**Tabelle 3**

| A. Trocknungsbedingungen | | | | |
|---|---|---|---|---|
| Versuchsnummer | | 16 | 13 | 14 |
| Produktbezeichnung | | Produkt C | Produkt C | Produkt C |
| Düsendruck | [bar] | 13 | 15 | 16 |
| Prozeßluftmenge | [kg/h] | 509 | 522 | 509 |
| Eintrittstemperatur | [°C] | 384 | 428 | 391 |
| Austrittstemperatur | [°C] | 161 | 170 | 159 |
| Dichte Suspension | [g/ml] | 1,1 | 1,1 | 1,1 |
| Suspensionstemperatur | [°C] | 20 | 20 | 20 |
| Feststoffgehalt | [%] | 19 | 19 | 19 |
| Viskosität | [mPa*s] | 74 | 74 | 74 |

| B. Physikalisch-chemische Eigenschaften | | | | |
|---|---|---|---|---|
| Produktfeuchte | [%] | 37 | 46 | 29 |
| Korngrößenverteilung | | | | |
| D[v, 0.5] | [µm] | 306 | - | 321 |
| D[v, 0.9] | [µm] | 450 | - | 462 |
| D[v, 0.1] | [µm] | 203 | - | 209 |
| N₂-Oberfläche | [m²/g] | 190 | 188 | 186 |
| CTAB-Oberfläche | [m²/g] | 168 | 170 | 171 |
| pH-Wert | | 4 | 4,1 | 4 |
| Leitfähigkeit | [µS] | 350 | 320 | 350 |
| Feuchte | [%] | 3,8 | 3,8 | 3,9 |
| Stampfgewicht | [g/l] | 278 | 294 | 278 |
| DBP-Aufnahme | [g/100g] | 222 | 216 | 231 |
| Alpine SR > 500 µm | [%] | 0,1 | 0,7 | 0,1 |
| Alpine SR > 355 µm | [%] | 6,8 | 16,1 | 6,8 |
| Alpine SR > 250 µm | [%] | 64,5 | 68,1 | 56,4 |
| Alpine SR > 180 µm | [%] | 86,3 | 88,8 | 86 |
| Alpine SR > 63 µm | [%] | 100 | 100 | 99,1 |
| Alpine SR > 45 µm | [%] | 100 | 100 | 100 |

### Beispiel 4

### (FSD-Technologie)

Die Herstellung der Fällungskieselsäure erfolgt gemäß DE-A 14 67 019, Beispiel 1. Dabei wird im einzelnen so vorgegangen, wie es in Beispiel 1 dieser Anmeldung beschrieben wird.

Die erhaltene Fällungskieselsäure wird abfiltriert. Der Fällungskieselsäurefilterkuchen wird gewaschen und gemäß Beispiel 1 der DE-C 24 47 613 in eine Fällungskieselsäuresuspension überführt. Dabei wird im einzelnen so vorgegangen, wie es in Beispiel 1 dieser Anmeldung beschrieben wird.

Die Fällungskieselsäuresuspension weist einen Feststoffgehalt von 19,2 Gew.-% und einen pH-Wert von 3,2 auf.

Es werden drei Trocknungsversuche in der FSD-Anlage mit der Fällungskieselsäuresuspension durchgeführt. Die Fällungskieselsäuresuspension wird dabei in den verschiedenen Versuchen über drei unterschiedliche Düsengrößen zerstaubt. Dieser Betriebsparameter hat in Verbindung mit der eingesetzten Düsengeometrie die größten Einflüsse auf die Partikelgrößenverteilung.

Die zum Einsatz gebrachte Suspension wird vor Trocknungsbeginn über ein Schwingsieb mit 0,5 mm Maschenweite filtriert, um eine Verstopfung der Druckdüse durch gegebenenfalls vorhandene Verunreinigungen während der Versuchsdurchführung zu verhindern. Die Betriebsparameter sind in der Tabelle 5 aufgeführt:

**Tabelle 5**

| **Versuchsbezeichnung** | | **FSD 1** | **FSD 2** | **FSD 3** |
|---|---|---|---|---|
| DruckdüseTyp | | SDX 1,6 SB | SDX 1,4 SB | SDX 1,5 SB |
| Düsendurchmesser | mm | 1,6 | 1,4 | 1,5 |
| Zerstäubungsdruck | bar | 16,2 - 17,2 | 16,2 - 17,2 | 13,3 |
| Suspensionsmenge | l/h | 156 | 156 | 153 |
| Eintrittstemperatur | °C | 301 | 300 | 295 |
| Austrittstemperatur | °C | 104 | 103 | 108 |
| Eintrittstemperatur Fließbett (integriert) | °C | 125 | 125 | 158 |
| Differenzdruck Fließbett (integriert) | mmWS | 38,5 | 37,1 | 43,7 |
| Unterdruck Trockenkammer | mmWS | -20 | -15 | -22 |
| Differenzdruck Entstaubungsfilter | mmWS | 147 | 198 | 83 |

Von den jeweiligen Durchschnittsproben der erhaltenen Fällungskieselsauregranulate werden anschließend die chemisch-physikalischen Daten bestimmt. Sie sind in der Tabelle 6 dargestellt:

**Tabelle 6**

| | | **Produkt A Versuch 1 FSD-Anlage** | **Produkt A Versuch 3 FSD-Anlage** |
|---|---|---|---|
| Wassergehalt | % | 6,3 | 4,7 |
| pH-Wert | | 4,0 | 3,9 |
| Leitfähigkeit | µS | 930 | 700 |
| N₂-Oberfläche | m²/g | - | 207 |
| CTAB-Oberfläche | m²/g | - | 183 |
| DBP-Aufnahme | g/100 g | 242 | 239 |
| Stampfdichte | g/l | 270 | 278 |
| Alpine-SR > 63 µm | % | 99 | 100 |
| Alpine-SR > 180 µm | % | 98 | 98 |
| Alpine-SR > 250 µm | % | 89 | 89 |
| Alpine-SR > 300 µm | % | 52 | 63 |
| Alpine-SR > 500 µm | % | 6,0 *) | 1,6 |
| Trübung | | - | 1,0 |

| | | | |
|---|---|---|---|
| *) Diese Fraktion enthielt Wandanbackungen aus der Trockenkammer. | | | |

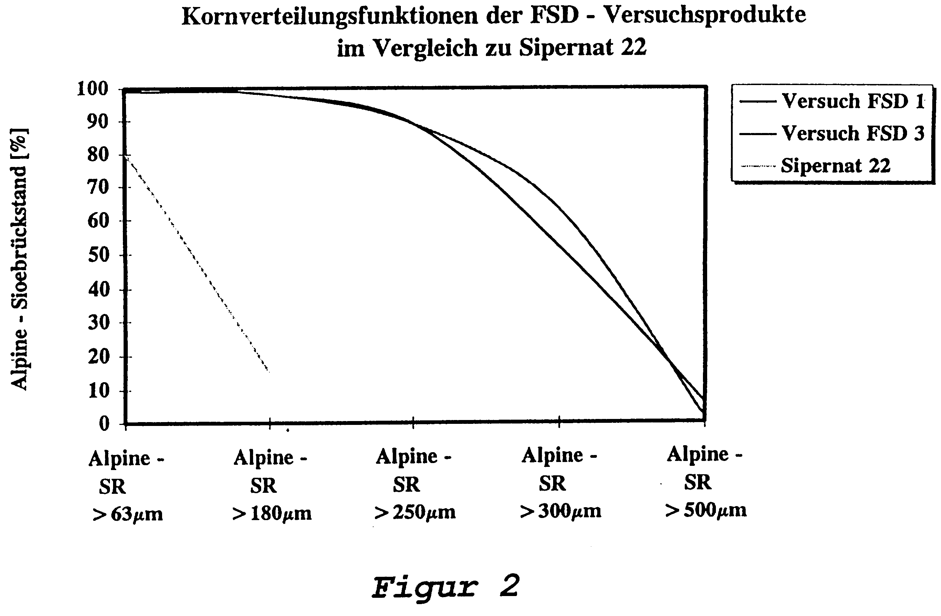

Die ermittelten Kornverteilungen der mittels FSD-Anlage hergestellten Fällungskieselsäuregranulate sind im Vergleich zu einer typischen Sipernat 22-Probe in der Figur 2 graphisch dargestellt. Die Grobteiligkeit und Staubfreiheit der untersuchten Fällungskieselsäuregranulate wird am Kurvenverlauf deutlich sichtbar.

Die FSD-Technologie wird beschrieben in Chem. Ing. Techn. 59 (1987) Nr. 2, Seiten 112 bis 117.

FSD bedeutet Fluidized Spray Dryer und beschreibt einen Sprühtrockner mit integriertem Fließbetttrockner.

Mit den Fällungskieselsäuregranulaten A, B und C sowie FSD werden Staubmessungen durchgeführt.

Dabei werden die Zahlen an den Fällungskieselsäuregranulaten A, B und C sowie FSD selbst sowie an den mit Vitamin E-Acetat sowie mit Cholinchloridlösung beladenen Produkten A, B und C sowie FSD ermittelt.

Die Ergebnisse der Staubmessungen sind in den Tabellen 7, 8 und 9 aufgeführt.

Die Staubmessungen an den Fällungskieselsäuregranulaten werden mittels der folgenden Methode durchgeführt:

### Grundlagen

Verarbeitung und Handhabung von Fällungskieselsäuren verursachen Stäube in verschiedenen Formen (Gesamtstaub, Feinstaub, Feinststaub). Diese Stäube sind je nach Fein- bzw. Feinstanteilen der Fällungskieselsäure unterschiedlich. Die Messung der Staubkurve zeigt das Staubmaximum und das Absinkverhalten der Fällungskieselsäure.

### Prüfmittel

### A. Prüfgeräte:

Staubmeßgerät 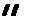 Cassella", Fa. Hoechst
Schreiber, Fa. ABB
Präzisionswaage
Gewindeaufsatz mit Trichter und Schieber
250 ml Glaspulverflasche

### Durchführung

Die Fällungskieselsäuren werden entsprechend ihrer Teilchengröße in folgende Kategorien eingestuft:

| Fällungskieselsäuren | | Teilchengröße, Mittlere [µm] | Bestimmung des Staubverhaltens |
|---|---|---|---|
| A | sehr kleine Teilchengröße | ca. 5,5 | von 30 g Einwaage wird die Staubzahl bestimmt und von 15 - 20 g die vollständige Staubkurve aufgenommen |
| | | ca. 4,5 | |
| | | ca. 5,5 | |
| B | kleine Teilchengröße | ca. 7 | von 30 g Einwaage wird die Staubzahl bestimmt und von 20 g die vollständige Staubkurve aufgenommen |
| | | ca. 8 | |
| | | ca. 15 | |
| C | mittlere Teilchengröße | ca. 100 | von 30 g Einwaage wird die vollständige Staubkurve aufgenommen |
| | | ca. 135 | |
| | | ca. 50 | |
| D | grobe Teilchengröße | ca. 200 | von 30 g Einwaage wird die Staubzahl bestimmt und von 20 g bzw. vorzugsweise 45 g die vollständige Staubkurve aufgenommen |

Von den Fällungskieselsäuren A, B und D wird die Staubzahl bei 30 g wie folgt bestimmt:

30 g der zu prüfenden Fällungskieselsäure wird in ein 250 ml Schraubglas eingewogen und mittels Trichter (Gewindeaufsatz) quantitativ in den Gerätetrichter überführt. Nach dem Nullabgleich am Gerät wird der Schreiber mit einer Geschwindigkeit von 6 cm/min gestartet und die Messung am Startknopf des Staubmeßgerätes begonnen.

Die Probe wird automatisch mittels Magnetschalter in das Fallrohr überführt. Die Erfassung des Maximumwertes wird nach 3 Sekunden digital ausgewiesen. Nach 30 Sekunden wird ein 2. Wert ermittelt, der zu dem Maximumwert addiert wird. Die Summe ist die Staubzahl, die ebenfalls digital am Gerät ausgewiesen wird.

Bestimmung der Staubkurve und der Staubzahl:

Die in der Tabelle angegebene Menge der zu prüfenden Fällungskieselsäure wird in ein 250 ml Schraubglas eingewogen und die Staubzahl wie oben bestimmt. Zudem wird über eine Meßdauer von 5 Minuten das Absinkverhalten verfolgt. Anschließend wird der Versuch beendet und die Schreiberkurve ausgewertet.

### Auswertung

Bei den Fällungskieselsäuren der Kategorie C werden als Meßergebnisse die Meßwerte in % nach 10 Sekunden, 30 Sekunden, 1 Minute und 5 Minuten, das Maximum und die Staubzahl sowie die Absinkzeiten des Staubes bei dem Wert von 5 % und 2 % in Sekunden angegeben.

Bei den Fällungskieselsäuren der Kategorien A, B und D, bei den die Messungen mit 15, 20 und 45 g respektive durchgeführt wurden, ist eine Umrechnung auf die Vergleichsbasis von 30 g notwendig. Hierzu wird die Staubzahl der Probe bei einer Einwaage von 30 g durch die Staubzahl bei der Einwaage x g dividiert. Der so ermittelte Faktor wird nun für die folgenden Umrechnungen eingesetzt und auf diese Weise das Staubverhalten bei einer 30 g Einwaage berechnet.$\text{berechneter Wert bei 30 g = Wert bei xg ∗} \frac{\text{Staubzahl 30 g}}{\text{Staubzahl xg}}$

Bei den Ergebnissen ist stets durch eine Fußnote anzugeben, ob es sich um berechnete oder tatsächlich bestimmte Werte handelt.

**Tabelle 7**

| Staubmessungen Fällungskieselsäuregranulate ohne Belastung | | | | |
|---|---|---|---|---|
| Fällungskieselsäure | Produkt A Versuch 6, 829 | Produkt B Versuch 18, 830 | Produkt C Versuch 13, 831 | Produkt A, FSD Versuch 3, 832 |
| Maximum, % | 6,6 ** | 3,5 ** | 3,2 ** | 1,2 ** |
| Staubzahl % | 10,1 ** | 5,5 ** | 4,1 ** | 2,0 ** |

| Wert bei, % | | | | |
|---|---|---|---|---|
| 10 Sek. | 4,6 ** | 2,7 ** | 1,8 ** | 1,0 ** |
| 30 Sek. | 3,5 ** | 2,0 ** | 0,9 ** | 0,8 ** |
| 1 Min. | 2,9 ** | 0,9 ** | 0,8 ** | 0,6 ** |
| 5 Min. | 0,7 ** | 0,6 ** | 0,4 ** | 0,1 ** |
| Absinkzeit bis 5%, Sek. | 3 | 2 | 2 | 0 |
| Absinkzeit bis 2 %, Sek. | 29 | 32 | 16 | 0 |

| | | | | |
|---|---|---|---|---|
| (** 45 g Messung auf 30 g berechnet) | | | | |

Die erfindungsgemäßen Fällungskieselsäuregranulate (48 Gramm) werden mit 90 %igem Vitamin E-Acetat (52 Gramm) beladen.

Das Staubverhalten wird nach derselben Methode wie bei den Fällungskieselsäuregranulaten bestimmt. Die Ergebnisse sind in der Tabelle 8 aufgeführt.

**Tabelle 8**

| Staubmessungen nach der Beladung mit Vitamin E-Acetat ohne Belastung | | | | |
|---|---|---|---|---|
| Fällungskieselsaure | Produkt A Versuch 6, 829 | Produkt B Versuch 18, 830 | Produkt C Versuch 13, 831 | Produkt A, FSD Versuch 3, 832 |
| Maximum, % | 2,7 | 4,2 | 1,6 | 1,2 |
| Staubzahl % | 3,9 | 5,9 | 2,1 | 1,4 |

| Wert bei, % | | | | |
|---|---|---|---|---|
| 10 Sek. | 2,1 | 2,8 | 0,6 | 0,6 |
| 30 Sek. | 1,2 | 1,7 | 0,5 | 0,2 |
| 1 Min. | 0,8 | 1,2 | 0,3 | 0,2 |
| 5 Min. | 0,2 | 0,3 | 0,1 | 0 |
| Absinkzeit bis 5%, Sek. | 0 | 0 | 0 | 0 |
| Absinkzeit bis 2%, Sek. | 12 | 24 | 2 | 0 |

**Tabelle 9**

| 50 %iges Cholinchlorid | | | | |
|---|---|---|---|---|
| Fällungskieselsäure | Produkt A Versuch 6, 829 | Produkt B Versuch 18, 830 | Produkt C Versuch 13, 831 | Produkt A, FSD Versuch 3, 832 |
| Stampfdichte, g/l | 677 | 590 | 634 | 714 |
| Schüttkegelhöhe, mm | 23 | 11 | 42 | 12 |
| Glasauslaufgefäße, Note | 2 | 1 | 5 | 1 |
| Zugabe Sipernat D17, % | 0,1 | / | 0,1 | / |
| Schüttkegelhöhe, mm | 9 | / | 11 | / |
| Glasauslaufgefäße, Note | 1 | / | 1 | / |
| Agglomeratanteil, % | 1,1 | 0,6 | zu feucht | 1,9 |
| maximale Cholinchloridaufnahme, g/100g | 245 * | 300 * | 205 * | 240 * |

| | | | | |
|---|---|---|---|---|
| * Aufgrund der eingestellten Partikelgröße sind die Cholinchloridkonzentrate trotz wachsartigem Aussehen noch sehr gut fließfähig. Aus diesem Grunde sind die Werte der maximalen Cholinchloridaufnahme sehr hoch. | | | | |

Die erfindungsgemäßen Fällungskieselsäuregranulate werden mit 75 %iger wäßriger Cholinchloridlösung beladen. Die Daten der beladenen Fällungskieselsäuregranulate sind in der Tabelle 9 aufgeführt. Zur Bestimmung der Daten werden die folgenden Methoden verwendet:

### Bestimmung der Stampfdichte

### Grundlagen

Eine Kenngröße für die Befüllung von Silos ist die Stampfdichte. Sie gibt Auskunft über die maximale Masse eines Gutes, die pro zur Verfügung stehenden Volumeneinheit in das Silo eingefüllt werden kann.

### Prüfmittel

### A. Prüfgeräte

Meßzylinder 250 ml Fa. Engelsmann, Ludwigshafen
Stampfvolumeter Fa. Engelsmann, Ludwigshafen
Trichter
Kartenblatt
Präzisionswaage

### Durchführung

Es wird eine Füllhöhe von 200 ml ± 10 ml des ungesiebten Materials in einem graduierten 250 ml Meßzylinder eingewogen und anschließend im Stampfvolumeter 1250 Mal gestampft. Nach dem Stampfen wird die Oberfläche im Meßzylinder mit dem Kartenblatt egalisiert und das Volumen abgelesen.

### Auswertung

$\text{Stampfdichte in [g/l] =} \frac{\text{Masse [g] x 1000}}{\text{Volumen [ml]}}$

### Prüfung der Fließfähigkeit mittels Schüttkegelhöhe

### Grundlagen

Für die gleichmäßige Entleerung eines Pulversilos und exaktes Dosieren des Pulvers ist ein gutes Fließverhalten des jeweiligen Pulvers Voraussetzung. Ein gutes Beurteilungskriterium für das Fließverhalten ist der Schüttwinkel. Da die Schüttkegelhöhe bei gleichem Basismaß in direkter Abhängigkeit zum Schüttwinkel steht und wesentlich einfacher zu bestimmen ist, wird diese bestimmt. Gut rieselfähige Pulver haben eine niedrige Schüttkegelhöhe.

### Prüfmittel

### A. Prüfgeräte

Metallsieb (1 mm)
Höhenreißer
Metallvollzylinder, d = 50 mm, h = 80 mm
Schaber

### Durchführung

Das Drahtsieb wird an dem Stativ in ca. 10 cm Abstand über dem Metallvollzylinder befestigt. Zur Einstellung der endgültigen Höhe des Siebes wird das voraussichtlich schlechteste Pulver langsam auf das Sieb geschüttet und mittels Schaber vorsichtig durch das Sieb passiert. Der Abstand des Siebes von der Schüttkegelspitze des Pulvers wird auf 2 cm eingestellt. Diese Höhe wird bei allen weiteren Vergleichsprüfungen eingehalten. Ist der Schüttkegel des Pulvers gleichmäßig geformt, so ist die Siebung des Pulvers beendet und die Schüttkegelhöhe wird mit dem Höhenreißer an der Spitze des Kegels abgelesen.

### Auswertung

Die Schüttkegelhöhe wird in mm angegeben.

### Prüfung der Fließfähigkeit mittels Glasauslaufgefäßen

### Grundlagen

Für die gleichmäßige Entleerung eines Pulversilos und exaktes Dosieren des Pulvers ist ein gutes Fließverhalten (des jeweiligen Pulvers) Voraussetzung. Schlecht rieselfähige Pulver fließen nicht oder nur durch Auslaufgefäße mit sehr großer Auslauföffnung; daher erhalten gut rieselfähige Pulver eine niedrige Benotung.

### Prüfmittel

### A. Prüfgeräte

Meßgefäß 1 = 2,5 mm Durchmesser
Meßgefäß 2 = 5,0 mm Durchmesser
Meßgefäß 3 = 8,0 mm Durchmesser
Meßgefäß 4 = 12,0 mm Durchmesser
Meßgefäß 5 = 18,0 mm Durchmesser

### Durchführung

Beginnend mit Meßgefäß 5 wird das Auslaufgefäß auf ein Blatt Wägepapier gestellt und mittels eines zweiten, als Trichter dienenden, Wägepapiers bis zur Oberkante mit dem zu prüfenden Pulver gefüllt. Durch vorsichtiges Hochheben wird die Öffnung so freigegeben, daß das Pulver ausfließen kann. Fließt das Pulver durch ein Gefäß aus, so wird das nächstkleinere Gefäß verwendet und die o. a. Prozedur wiederholt.

### Auswertung:

| **Note** | **Beurteilung** |
|---|---|
| 1 | Pulver fließt frei aus Gefäß Nr. 1 aus |
| 2 | Pulver fließt frei aus Gefäß Nr. 2 aus |
| 3 | Pulver fließt frei aus Gefäß Nr. 3 aus |
| 4 | Pulver fließt frei aus Gefäß Nr. 4 aus |
| 5 | Pulver fließt frei aus Gefäß Nr. 5 aus |
| 6 | Pulver fließt nicht aus Gefäß Nr. 5 aus |

### Prüfung des Agglomeratanteiles eines 50 %igen Cholinchloridkonzentrates

### Grundlagen

Bei dem Vermischen von sprühgetrockneter Fällungskieselsäure mit 75 %iger Cholinchloridlösung zwecks Herstellung 50 %iger Konzentrate lassen sich unterschiedliche Verarbeitbarkeiten der Fällungskieselsäuren feststellen. In der Praxis wirkt sich vor allem ein nicht homogenisierbarer Agglomeratanteil störend aus. Dieser wird insbesondere durch mangelhafte Saugcharakteristik und hohe Fein- bzw. Feinstanteile der Fällungskieselsäure verursacht.

### Prüfmittel

### A. Prüfgeräte

Küchenmaschine Fa. Braun Modell KM 321
Tropftrichter 250 ml
Sieb 0,5 mm
Präzisionswaage
Kurzzeitmesser

### B. Prüfsubstanzen

75 %ige Cholinchloridlösung
Sipernat D17 Standmuster
zu prüfende Fällungskieselsäure

### Durchführung

200 g der zu prüfenden Fällungskieselsäure werden in die Rührschüssel vorgelegt. Unter Rühren bei Stufe 2 werden innerhalb von 2 Minuten 400 g 75 %ige Cholinchloridlösung zugetropft. Nach Abschluß des Zutropfens wird 2 Minuten nachgerührt. Danach werden zur Verbesserung der Trennschärfe 6 g Sipernat D17 zugegeben und 0,5 Minuten nachgerührt. Die erhaltene Mischung wird über ein 0,5 mm Sieb gegeben und durch Schütteln das Pulver von den Agglomeraten abgetrennt. Der Siebrückstand an Agglomeraten wird ausgewogen.

### Auswertung

$\text{Agglomeratanteil [%] =} \frac{\text{Rückstand [g] x 100 [%]}}{\text{600 [g]}}$

### Prüfung der Fließverbesserung eines 50 %igen Cholinchloridkonzentrates

### Grundlagen

Ein 50 %iges Cholinchloridkonzentrat auf Fällungskieselsäure soll mit einem möglichst geringen Zusatz an Sipernat D17 die bestmögliche Fließfähigkeit haben. Diese ist dann erreicht, wenn sich durch weiteren Zusatz an Sipernat D17 keine Verbesserung in der Benotung der Glasauslaufgefäße sowie der Schüttkegelhöhe erreichen Iäßt.

### Prüfmittel

### A. Prüfgeräte

Analysenwaage
Präzisionswaage
Turbula-Mischer

### B. Prüfsubstanzen

50 %ige Cholinchloridmischung auf zu prüfender Fällungskieselsäure Sipernat D17

### Durchführung

Zu dem 50 %igen Cholinchloridkonzentrat werden 0,1 g Sipernat D17 zugewogen und im Turbula-Mischer 2 Minuten bei mittlerer Geschwindigkeit vermischt. Von dieser Mischung wird die Fließfähigkeit mittels Schüttkegelhöhe und Glasauslaufgefäßen bestimmt. Der Zusatz von jeweils 0,1 g Sipernat D 17 erfolgt solange, bis die Fließnote 1 erreicht ist. Ist die Fließnote 1 nicht erreicht, werden weiterhin jeweils 0,1 g Sipernat D17 zugegeben und die Prüfungen wiederholt.

### Auswertung

Schüttkegelhöhe in mm bei x g Zusatz an Sipernat D17. Glasauslaufgefäße in Fließnote bei x g Zusatz an Sipernat D17.

### Prüfung der maximalen Cholinchloridaufnahme

### Grundlagen

Die Bestimmung der maximalen Cholinchloridaufnahme soll das gesamte Saugpotential der Fällungskieselsäure erfassen.

### Prüfmittel

### A. Prüfgeräte

250 ml Becherglas hohe Form
Spatel
Präzisionswaage

### B. Prüfsubstanzen

75 %ige Cholinchloridlösung
zu prüfende Fällungskieselsäure

### Durchführung

10 g der zu prüfenden Fällungskieselsäure werden in ein 250 ml Becherglas hohe Form eingewogen und tropfenweise unter Rühren mit dem Spatel 75 %ige Cholinchloridlösung zugegeben. Durch ständiges Beobachten der Mischung wird überprüft, wann die maximale Aufnahme erreicht ist. Bei genauer Betrachtung lassen sich weiße Fällungskieselsäureteilchen erkennen, die sich von wachsartigen (gesättigten) Teilchen deutlich abheben. Die maximale Cholinchloridaufnahme ist erreicht, wenn sich keine unbeladenen Teilchen mehr in der Mischung befinden und diese noch nicht wachsartig/schmierend ist.

### Auswertung

$\text{Max. Cholinchlorid-Aufnahme in g/100 g =} \frac{\text{(a-10) x 100}}{\text{10}}$
a = Gesamtgewicht

Diese anwendungstechnische Untersuchung zeigt, daß die erfindungsgemäßen Fällungskieselsäuregranulate eine ausgezeichnete Kornstabilität und damit einhergehend eine sehr geringe Neigung zur Staubbildung aufweisen.

Besonders staubarm und damit kornstabil sind die mittels der FSD-Technologie hergestellten Fällungskieselsäuregranulate.

Die erfindungsgemäßen Fällungskieselsäuregranulate sind als Träger für Cholinchlorid und Vitamin E sehr gut geeignet.

Zu Vergleichszwecken wird ein bekanntes Fällungskieselsäuregranulat gemäß EP-B 0 018 866 (Zeosil 1165 MP) mit denselben Methoden untersucht. Die Ergebnisse sind in den Tabellen 10, 11 und 12 aufgeführt.

**Tabelle 10**

| | Zeosil 1165 MP UB 14624, Muster 858 Rhone Poulenc | Zeosil 1165 MP UB 14502, Muster 775 Rhone Poulenc |
|---|---|---|
| | | |

| Rohware | | |
|---|---|---|
| Stampfdichte, g/l | 299 | 307 |
| Schüttkegelhöhe, mm | 15 | 16 |
| Glasauslaufgefäße, Note | 1 | 1 |

| Rohware ohne Belastung, 45 g Messung auf 30 g berechnet | | |
|---|---|---|
| Maximum, % | 23,3 | 26,8 |
| Staubzahl, % | 32,4 | 37,2 |

| Wert bei, % | | |
|---|---|---|
| 10 Sek. | 14,0 | 17,1 |
| 30 Sek. | 9,1 | 10,4 |
| 1 Min. | 5,6 | 8,1 |
| 5 Min. | 1,6 | 2,2 |
| Absinkzeit bis 5 %, Sek. | 62 | 173 |
| Absinkzeit bis 2 %, Sek. | 260 | > 300 |

**Tabelle 11**

| | Zeosil 1165 MP UB 14624, Muster 858 Rhone Poulenc | Zeosil 1165 MP UB 14502, Muster 775 Rhone Poulenc |
|---|---|---|
| | | |

| 50 %iges Vitamin E-Konzentrat | | |
|---|---|---|
| Sauggeschwindigkeit | 3 | 3 |
| Staubverhalten | 2 | 2 |
| Stampfdichte, g/l | 577 | 553 |
| Schüttkegelhöhe, mm | 13 | 12 |
| Glasauslaufgefäße, Note | 1 | 2 |

| 50 %iges Vitamin E-Konzentrat ohne Belastung | | |
|---|---|---|
| Maximum, % | 4,3 | 3,4 |
| Staubzahl, % | 5,9 | 4,7 |

| Wert bei, % | | |
|---|---|---|
| 10 Sek. | 2,3 | 1,8 |
| 30 Sek. | 1,6 | 1,3 |
| 1 Min. | 0,9 | 0,6 |
| 5 Min. | 0,2 | 0,3 |
| Absinkzeit bis 5 %, Sek. | 0 | 0 |
| Absinkzeit bis 2%, Sek. | 17 | 7 |

**Tabelle 12**

| | Zeosil 1165 MP UB 14624, Muster 858 Rhone Poulenc | Zeosil 1165 MP UB 14502, Muster 775 Rhone Poulenc |
|---|---|---|
| | | |

| 50 %iges Cholinchlorid | | |
|---|---|---|
| Stampfdichte, g/l | zu feucht | zu feucht |
| Schüttkegelhöhe, mm | > 50 | > 50 |
| Glasauslaufgefäße, Note | 6 | 6 |
| Zugabe Sipernat D17, % | 0,1/0,2/0,3/0,4/0,5/0,6 | 0,1/0,2/0,4/0,5 |
| Schüttkegelhöhe, mm | >50/>50/>50/14*/13*/13* | >50/>50/22/11 |
| Glasauslaufgefäße, Note | 6/6/6/2*/2*/1* | 6/6/4**/1 |
| maximale Cholinchloridaufnahme, g/100 g | 195 | 180 |
| Agglomeratanteil, % | zu feucht | zu feucht |

Das bekannte Fällungskieselsäuregranulat Zeosil 1165 MP gemäß EP-B 0 018 866 weist die in der Tabelle 13 aufgeführten physikalisch-chemischen Kenndaten auf.

**Tabelle 13**

| | | Zeosil 1165 MP Rhône Poulenc UB14624 | Zeosil 1165 MP Rhône Poulenc UB14502 11/95 |
|---|---|---|---|
| Spezifische Oberfläche (Ströhlein) | m²/g | 157 | 156 |
| Stampfdichte (DIN ISO 787/11) | g/l | 299 | 307 |
| Trocknungsverlust, 2 h/105 °C (DIN ISO 787/11) | % | 6,6 | 6,9 |
| Glühverlust (ISO 3262/11) | % | 4,3 | 4,0 |
| pH-Wert, 5 % (DIN ISO 787/9) | | 6,8 | 7,6 |
| Leitfähigkeit, 20 °C | µS/cm | 685 | 660 |
| DBP-Aufnahme (Originalmaterial) | g/100 g | 199 | 198 |
| DBP-Aufnahme (wasserfrei Korrekturtabelle) | g/100 g | 234 | 234 |
| Teilchengröße, Cilas HR 850, d50%-Wert 0'US | µm | 223 | 207 |
| Teilchengröße, Cilas HR 850, d 5%-Wert 0'US | µm | 474 | 452 |
| Teilchengröße, Cilas HR 850, d95%-Wert 0'US | µm | 20 | 14 |
| Trübung | NTU | 8 | 9 |
| Siebrückstand, Alpine (E=10 g) > 45 µm | % | 96 | 93 |
| Siebrückstand, Alpine (E=10 g) > 63 µm | % | 93 | 91 |
| Siebrückstand, Alpine (E=10 g) > 90 µm | % | 92 | 90 |
| Siebrückstand, Alpine (E=10 g) > 125 µm | % | 85 | 81 |
| Siebrückstand, Alpine (E=10 g) > 150 µm | % | 81 | 78 |
| Siebrückstand, Alpine (E=10 g) > 180 µm | % | 69 | 68 |
| Siebrückstand, Alpine (E=10 g) > 250 µm | % | 47 | 47 |
| Siebrückstand, Alpine (E=10 g) > 315 µm | % | 23 | 24 |
| Siebrückstand, Alpine (E=10 g) > 500 µm | % | 0,4 | 0,5 |
| Siebrückstand, Mocker (E=10 g) > 63 µm | % | < 0,01 | 0,1 |
| Chlorid, gesamt | ppm | 148 ± 1 | 165 |

Die Untersuchungen ergeben, daß die Beladung des bekannten Fällungskieselsäuregranulates mit Cholinchlorid nicht möglich ist. Es wird kein fließfähiges Produkt erhalten. Weiterhin ist der Staubgehalt des bekannten Fällungskieselsäuregranulates um ein Vielfaches höher als der des erfindungsgemäßen Fällungskieselsäuregranulates.

## Patentansprüche

1. Fällungskieselsäuregranulate, gekennzeichnet durch die folgenden Staubkennzahlen:
Staubmaximum ≦ 5,0 Gew.-%
Staubzahl ≦ 10,0 Gew.-%
Absinkzahl bis 5 % ≦ 5 sek.
Absinkzahl bis 2 % ≦ 50 sek.

2. Verfahren zur Herstellung der Fällungskieselsäuregranulate gemäß Anspruch 1, dadurch gekennzeichnet, daß man eine Fällungskieselsäuresuspension auf einen pH-Wert von 2 bis 3,9 einstellt und sprühtrocknet.

3. Verfahren zur Herstellung der Fällungskieselsäuregranulate nach Anspruch 2, dadurch gekennzeichnet, daß die Sprühtrocknung mittels einer Einstoff-Düse in einem Düsenturm durchgeführt wird.

4. Verfahren zur Herstellung der Fällungskieselsäuregranulate nach Anspruch 2, dadurch gekennzeichnet, daß die Sprühtrocknung mittels der FSD-Technologie durchgeführt wird.

5. Verwendung der Fällungskieselsäuregranulate gemäß Anspruch 1 zur Adsorption von flüssigen Wirkstoffen, insbesondere Vitaminen.

6. Verwendung der Fällungskieselsäure gemäß Anspruch 3 zur Adsorption von Cholinchloridlösung.
